# EUROPEAN PATENT APPLICATION

(11) **EP 4 776 416 A1**
(43) Date of publication of application: **15.07.2026**
(21) Application number: 25861737.2
(22) Date of filing: 22.09.2025
(51) Int. Cl.: H01M 50/282, H01M 50/383, H01M 50/289, H01M 50/244, H01M 50/342

(54) **FLAME COVER AND BATTERY PACK COMPRISING SAME**

(30) Priority: 11.11.2024 KR 20240158779
(71) Applicant: LG ENERGY SOLUTION, LTD., Seoul 07335 (KR)
(72) Inventor: LEE, Jae Hyun, Daejeon 34122 (KR)
(74) Representative: BCKIP Part mbB
(86) International application number: PCT/KR2025/014786
(87) International publication number: WO 2026/100992

(57) **Abstract**

According to exemplary embodiments, a battery pack is provided. The battery pack may include a pack housing including a bottom portion; first and second battery cell assemblies on the bottom portion; and a flame cover on the first and second battery cell assemblies. Each of the first and second battery cell assemblies may include a plurality of battery cells arranged in a first direction parallel to the bottom portion. The flame cover may include a plate and a fire-resistant film on the plate. The plate may include a first plate portion overlapping the first battery cell assembly in the vertical direction and including a plurality of first venting holes; a second plate portion overlapping the second battery cell assembly in the vertical direction and including a plurality of second venting holes; and bridges connecting the first plate portion and the second plate portion. The fire-resistant film may overlap each of the plurality of first venting holes and the plurality of second venting holes in the vertical direction.

## Description

### [Technical Field]

The present disclosure relates to a flame cover and a battery pack including the same. This application claims the benefit of priority from Korean Patent Application No. 10-2024-0158779, filed on November 11, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are expanding from mobile devices to mobility.

The trend in technological development of secondary batteries for mobility is the improvement of energy density and safety. Here, the energy density of a secondary battery is a value obtained by dividing the maximum electrical energy that the secondary battery can store by the mass of the secondary battery. Since the high energy density of secondary batteries is directly linked to the driving efficiency and cruising distance of mobility, various studies are being conducted to improve the energy density of secondary batteries.

One of the major solutions to increase the energy density of secondary batteries is a moduleless type battery pack (or cell-to-pack structure). Since a moduleless type battery pack omits a module covering battery cells, the mass of the battery pack can be dramatically reduced. The safety of secondary batteries is very important as it is directly linked to the lives of mobility passengers. A major challenge for improving secondary batteries is to provide a solution for preventing thermal propagation and thermal runaway of battery packs.

### [Summary]

### [Technical Problem]

The technical problem to be solved by the present disclosure is to provide a battery pack with improved safety.

### [Technical Solution]

According to exemplary embodiments of the present disclosure for solving the above-described problem, a battery pack is provided. The battery pack may include a pack housing including a bottom portion; first and second battery cell assemblies on the bottom portion; and a flame cover on the first and second battery cell assemblies. Each of the first and second battery cell assemblies may include a plurality of battery cells arranged in a first direction parallel to the bottom portion. The flame cover may include a plate and a fire-resistant film on the plate. The plate may include a first plate portion overlapping the first battery cell assembly in the vertical direction and including a plurality of first venting holes; a second plate portion overlapping the second battery cell assembly in the vertical direction and including a plurality of second venting holes; and bridges connecting the first plate portion and the second plate portion. The fire-resistant film may overlap each of the plurality of first venting holes and the plurality of second venting holes in the vertical direction.

The plate may further include a first slit defined by the first plate portion, the second plate portion, and the bridges.

The length of each of the plurality of first venting holes in the first direction may be different from the length of the first slit in the first direction. The length of each of the plurality of second venting holes in the first direction may be different from the length of the first slit in the first direction.

The length of each of the plurality of first venting holes in the first direction may be greater than the length of the first slit in the first direction. The length of each of the plurality of second venting holes in the first direction may be greater than the length of the first slit in the first direction.

The length of each of the plurality of first venting holes in a second direction parallel to the bottom portion and perpendicular to the first direction may be different from the length of the first slit in the second direction. The length of each of the plurality of second venting holes in the second direction may be different from the length of the first slit in the second direction.

The length of each of the plurality of first venting holes in the second direction may be smaller than the length of the first slit in the second direction. The length of each of the plurality of second venting holes in the second direction may be smaller than the length of the first slit in the second direction.

The fire-resistant film may include a second slit overlapping the first slit of the plate in the vertical direction.

The pack housing may further include a cross beam between the first battery cell assembly and the second battery cell assembly. The first slit of the plate may overlap the cross beam in the vertical direction.

The battery pack may further include bolts fastening the flame cover to the cross beam through the first slit.

Each of the plurality of first venting holes may overlap a corresponding one of the plurality of battery cells of the first battery cell assembly in the vertical direction. Each of the plurality of second venting holes may overlap a corresponding one of the plurality of battery cells of the second battery cell assembly in the vertical direction.

The plurality of first venting holes may be arranged in a matrix. The plurality of second venting holes may be arranged in a matrix.

According to exemplary embodiments of the present disclosure for solving the above-described problem, a battery pack is provided. The battery pack may include a pack housing on which first and second battery cell assemblies are mounted; and a flame cover on the first and second battery cell assemblies. The flame cover may include a plate including a first plate portion overlapping the first battery cell assembly in the vertical direction and including a plurality of first venting holes, a second plate portion overlapping the second battery cell assembly in the vertical direction and including a plurality of second venting holes, and a first slit between the first plate portion and the second plate portion; and a fire-resistant film on the plate.

The fire-resistant film may include a second slit overlapping the first slit in the vertical direction.

The fire-resistant film may overlap the plurality of first venting holes and the plurality of second venting holes in the vertical direction.

The plate may further include bridges connecting the first plate portion and the second plate portion.

### [Advantageous Effects]

According to exemplary embodiments of the present disclosure, a flame cover overlapping a plurality of battery cell assemblies may be provided. Accordingly, thermal propagation and thermal runaway of a battery pack can be prevented, and the manufacturing process of the battery pack can be simplified.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a top view illustrating a battery pack according to exemplary embodiments.
FIG. 2 is an exploded perspective view illustrating battery cell assemblies and a flame cover according to exemplary embodiments.
FIG. 3 is a cross-sectional view illustrating a battery pack according to exemplary embodiments.
FIG. 4 is a top view illustrating a plate of a flame cover according to exemplary embodiments.
FIG. 5 is a top view illustrating a flame cover according to exemplary embodiments.
FIG. 6 is a top view illustrating a plate of a flame cover according to exemplary embodiments.
FIG. 7 is a cross-sectional view illustrating a battery pack according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First and Second Embodiments)

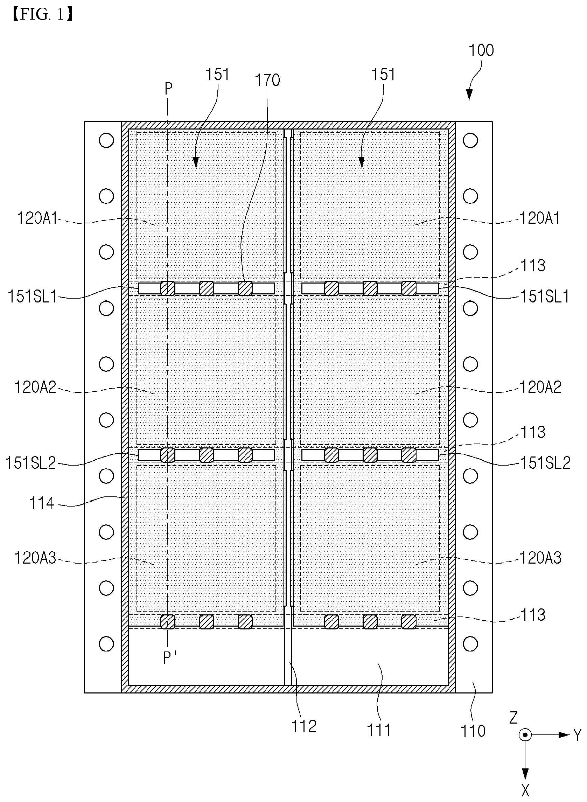

FIG. 1 is a top view illustrating a battery pack 100 according to exemplary embodiments.

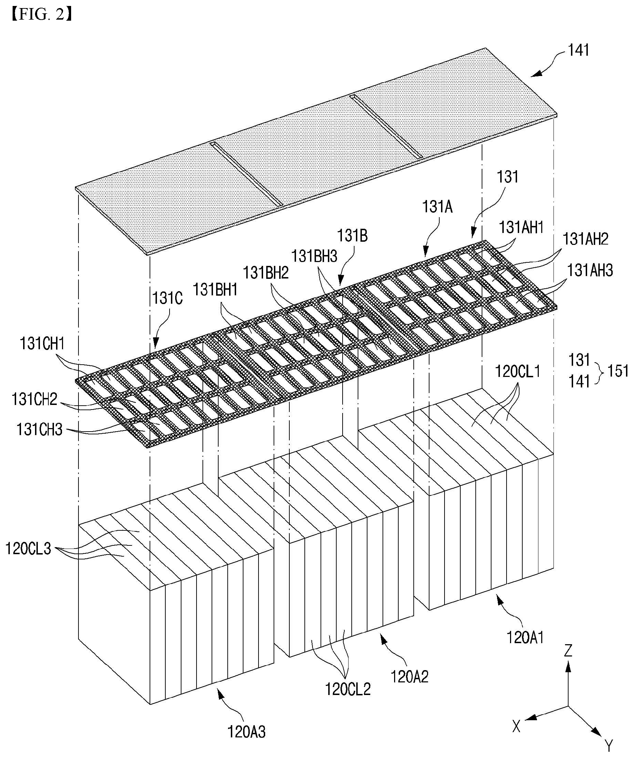

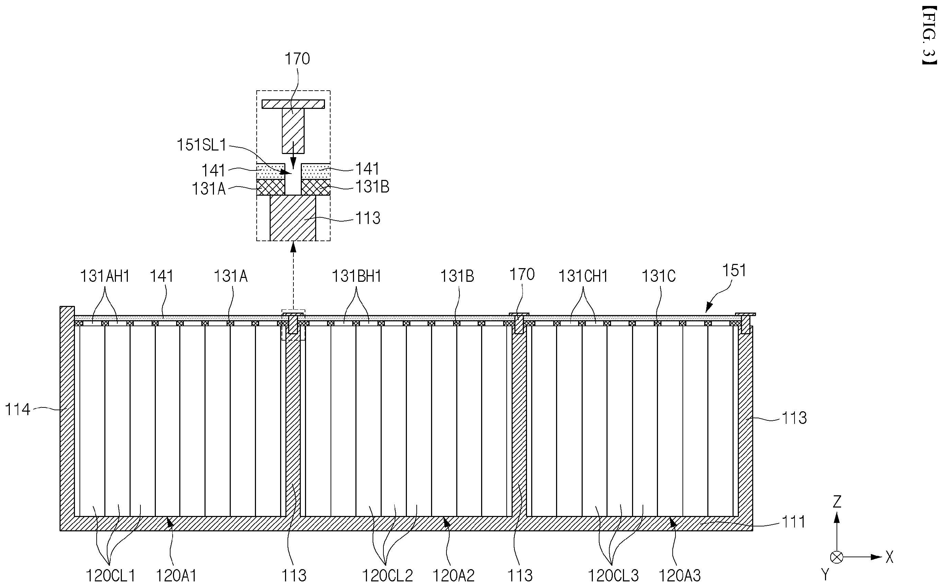

FIG. 2 is an exploded perspective view illustrating battery cell assemblies 120A1, 120A2, 120A3 and a flame cover 151 according to exemplary embodiments. FIG. 3 is a cross-sectional view illustrating a battery pack 100 according to exemplary embodiments. FIG. 3 illustrates a cross-section taken along P-P' of FIG. 1.

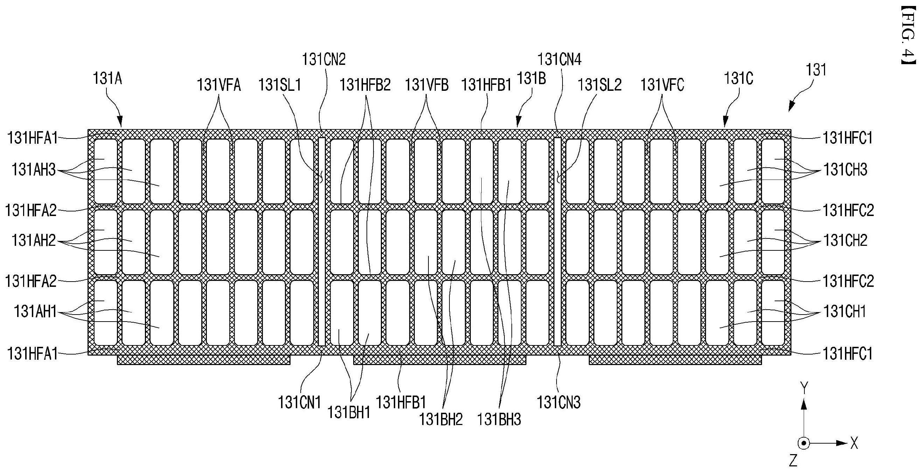

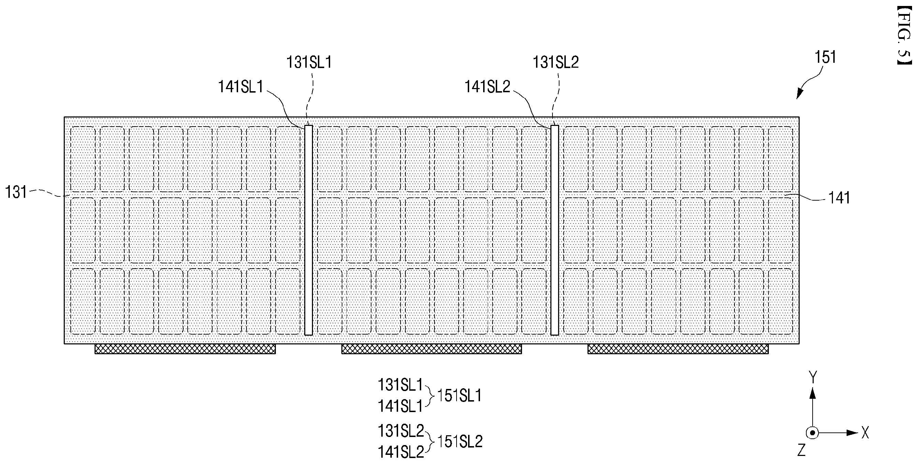

FIGS. 4 and 5 are top views illustrating a flame cover 151 according to exemplary embodiments. FIG. 4 illustrates a plate 131 of the flame cover 151. FIG. 5 illustrates a plate 131 and a fire-resistant film 141 of the flame cover 151.

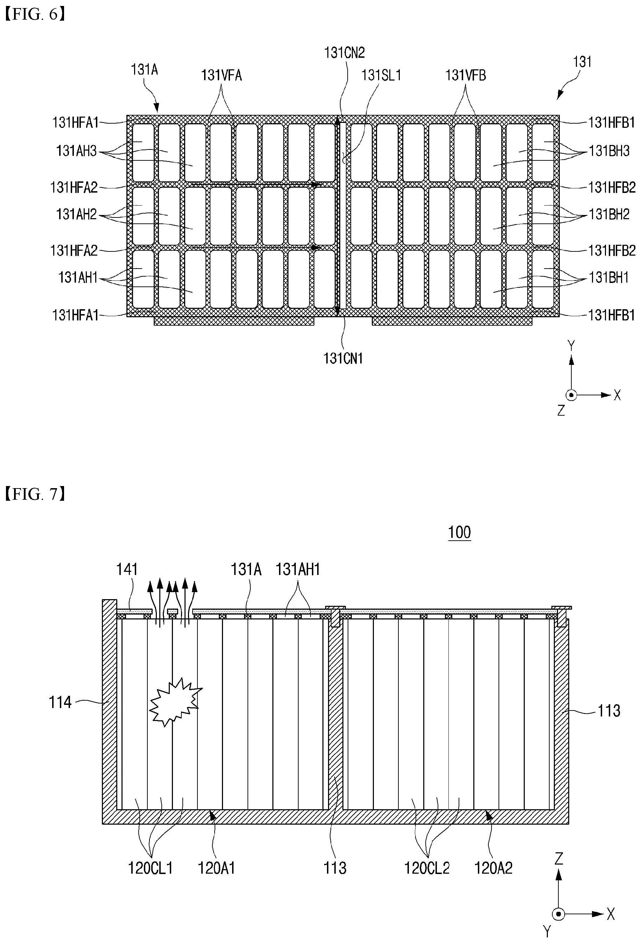

FIGS. 6 and 7 illustrate the battery pack 100 when an ignition event occurs. FIG. 6 is a top view illustrating a plate 131 of the flame cover 151. FIG. 7 illustrates a cross-sectional view of the battery pack 100. In FIGS. 6 and 7, arrows without reference numerals indicate heat transfer paths.

Referring to FIG. 1 to FIG. 5, the battery pack 100 may include a pack housing 110, battery cell assemblies 120A1, 120A2, 120A3, and a flame cover 151.

The pack housing 110 may provide a space in which a plurality of battery cell assemblies 120A1, 120A2, 120A3 are disposed. The pack housing 110 may include a bottom portion 111, a center beam 112, cross beams 113, and sidewalls 114.

Two directions substantially parallel to a mounting surface of the bottom portion 111 are defined as an X direction and a Y direction, and a direction substantially perpendicular to the mounting surface of the bottom portion 111 is defined as a Z direction. Each of the X direction, the Y direction, and the Z direction may be substantially perpendicular to each other. Unless otherwise stated, the definitions of directions are the same for the diagrams below.

The battery cell assemblies 120A1, 120A2, 120A3 may be disposed on the bottom portion 111. The bottom portion 111 may support the battery cell assemblies 120A1, 120A2, 120A3 from a lower portion in the Z direction. The battery cell assemblies 120A1, 120A2, 120A3 may be separated from each other by the center beam 112 and the cross beams 113. The battery cell assemblies 120A1, 120A2, 120A3 may be separated from each other in the Y direction by the center beam 112. The battery cell assemblies 120A1, 120A2, 120A3 may be separated from each other in the X direction by the cross beams 113.

The center beam 112 may extend in the X direction. The center beam 112 may be located at a central portion of the bottom portion 111. The cross beams 113 may extend in the Y direction. Each of the cross beams 113 may intersect the center beam 112 in the Y direction.

Each of the battery cell assemblies 120A1, 120A2, 120A3 may include a plurality of battery cells arranged in the X direction. The battery cell assembly 120A1 may include a plurality of battery cells 120CL1 arranged in the X direction. The battery cell assembly 120A2 may include a plurality of battery cells 120CL2 arranged in the X direction. The battery cell assembly 120A3 may include a plurality of battery cells 120CL3 arranged in the X direction.

In this example, the battery cell assemblies 120A1, 120A2, 120A3 are arranged in 3 rows and 2 columns. Accordingly, the battery cell assemblies 120A1, 120A2, 120A3 may be said to be arranged in 3 * 2. A person skilled in the art will be able to easily arrive at a battery pack including the battery cell assemblies 120A1, 120A2, 120A3 arranged in M * N based on what is described herein. Here, each of M and N is any integer of 2 or more.

The sidewalls 114 may horizontally surround the battery cell assemblies 120A1, 120A2, 120A3, the center beam 112, and the cross beams 113. Each of the sidewalls 114 may be perpendicular to the bottom portion 111. Each of the sidewalls 114 may be located on an edge of the bottom portion 111.

The flame cover 151 may be located above the battery cell assemblies 120A1, 120A2, 120A3 in the Z direction. The flame cover 151 may overlap the battery cell assemblies 120A1, 120A2, 120A3 in the Z direction.

The flame cover 151 may include a plate 131 and a fire-resistant film 141. The fire-resistant film 141 may be located above the plate 131 in the Z direction. The flame cover 151 may be disposed such that the plate 131 faces the plurality of battery cell assemblies 120A1, 120A2, 120A3.

The plate 131 may include a first plate portion 131A, a second plate portion 131B, and a third plate portion 131C. The first plate portion 131A may overlap the battery cell assembly 120A1 in the Z direction. The second plate portion 131B may overlap the battery cell assembly 120A2 in the Z direction. The third plate portion 131C may overlap the battery cell assembly 120A3 in the Z direction.

The first plate portion 131A may include a plurality of venting holes 131AH1, 131AH2, 131AH3. The plurality of venting holes 131AH1, 131AH2, 131AH3 may overlap the battery cell assembly 120A1 in the Z direction. The plurality of venting holes 131AH1 may be arranged in the X direction. The plurality of venting holes 131AH2 may be arranged in the X direction. The plurality of venting holes 131AH3 may be arranged in the X direction. Each of the plurality of venting holes 131AH1 may be spaced apart from each of the plurality of venting holes 131AH2 in the Y direction. Each of the plurality of venting holes 131AH2 may be spaced apart from each of the plurality of venting holes 131AH3 in the Y direction. Each of the plurality of venting holes 131AH1 may be aligned in the Y direction with a corresponding one of the plurality of venting holes 131AH2 and a corresponding one of the plurality of venting holes 131AH3. Each of the plurality of venting holes 131AH1, 131AH2, 131AH3 may overlap a corresponding one of the battery cells 120CL1 of the battery cell assembly 120A1 in the Z direction. Each of the battery cells 120CL1 of the battery cell assembly 120A1 may overlap in the Z direction with a corresponding one of the plurality of venting holes 131AH1, a corresponding one of the plurality of venting holes 131AH2, and a corresponding one of the plurality of venting holes 131AH3.

The second plate portion 131B may include a plurality of venting holes 131BH1, 131BH2, 131BH3. The plurality of venting holes 131BH1, 131BH2, 131BH3 may overlap the battery cell assembly 120A2 in the Z direction. The plurality of venting holes 131BH1 may be arranged in the X direction. The plurality of venting holes 131BH2 may be arranged in the X direction. The plurality of venting holes 131BH3 may be arranged in the X direction. Each of the plurality of venting holes 131BH1 may be spaced apart from each of the plurality of venting holes 131BH2 in the Y direction. Each of the plurality of venting holes 131BH2 may be spaced apart from each of the plurality of venting holes 131BH3 in the Y direction. Each of the plurality of venting holes 131BH1 may be aligned in the Y direction with a corresponding one of the plurality of venting holes 131BH2 and a corresponding one of the plurality of venting holes 131BH3. Each of the plurality of venting holes 131BH1, 131BH2, 131BH3 may overlap a corresponding one of the battery cells 120CL2 of the battery cell assembly 120A2 in the Z direction. Each of the battery cells 120CL2 of the battery cell assembly 120A2 may overlap in the Z direction with a corresponding one of the plurality of venting holes 131BH1, a corresponding one of the plurality of venting holes 131BH2, and a corresponding one of the plurality of venting holes 131BH3.

The third plate portion 131C may include a plurality of venting holes 131CH1, 131CH2, 131CH3. The plurality of venting holes 131CH1, 131CH2, 131CH3 may overlap the battery cell assembly 120A3 in the Z direction. The plurality of venting holes 131CH1 may be arranged in the X direction. The plurality of venting holes 131CH2 may be arranged in the X direction. The plurality of venting holes 131CH3 may be arranged in the X direction. Each of the plurality of venting holes 131CH1 may be spaced apart from each of the plurality of venting holes 131CH2 in the Y direction. Each of the plurality of venting holes 131CH2 may be spaced apart from each of the plurality of venting holes 131CH3 in the Y direction. Each of the plurality of venting holes 131CHI1 may be aligned in the Y direction with a corresponding one of the plurality of venting holes 131CH2 and a corresponding one of the plurality of venting holes 131CH3. Each of the plurality of venting holes 131CH1, 131CH2, 131CH3 may overlap a corresponding one of the battery cells 120CL3 of the battery cell assembly 120A3 in the Z direction. Each of the battery cells 120CL3 of the battery cell assembly 120A3 may overlap in the Z direction with a corresponding one of the plurality of venting holes 131CH1, a corresponding one of the plurality of venting holes 131CH2, and a corresponding one of the plurality of venting holes 131CH3.

In this example, each of the plurality of venting holes 131AH1, 131AH2, 131AH3 of the first plate portion 131A, the plurality of venting holes 131BH1, 131BH2, 131BH3 of the second plate portion 131B, and the plurality of venting holes 131CH1, 131CH2, 131CH3 of the third plate portion 131C are arranged in 3 rows and 8 columns. However, the number, arrangement, and shape of the plurality of venting holes 131AH1, 131AH2, 131AH3 of the first plate portion 131A, the plurality of venting holes 131BH1, 131BH2, 131BH3 of the second plate portion 131B, and the plurality of venting holes 131CH1, 131CH2, 131CH3 of the third plate portion 131C are not limited to the above.

According to exemplary embodiments, each of the battery cells 120CL1 of the battery cell assembly 120A1 may overlap in the Z direction with two or more of the plurality of venting holes 131AH1 of the first plate portion 131A, two or more of the plurality of venting holes 131AH2 of the first plate portion 131A, and two or more of the plurality of venting holes 131AH3 of the first plate portion 131A, respectively. According to exemplary embodiments, each of the battery cells 120CL2 of the battery cell assembly 120A2 may overlap in the Z direction with two or more of the plurality of venting holes 131BH1 of the first plate portion 131B, two or more of the plurality of venting holes 131BH2 of the first plate portion 131B, and two or more of the plurality of venting holes 131BH3 of the first plate portion 131B, respectively. According to exemplary embodiments, each of the battery cells of the battery cell assembly 120A3 may overlap in the Z direction with two or more of the plurality of venting holes 131CH1 of the first plate portion 131C, two or more of the plurality of venting holes 131CH2 of the first plate portion 131C, and two or more of the plurality of venting holes 131CH3 of the first plate portion 131C.

According to exemplary embodiments, each of the plurality of venting holes 131AH1, 131AH2, 131AH3 of the first plate portion 131A may overlap two or more battery cells of the battery cells 120CL1 of the battery cell assembly 120A1 in the Z direction. According to exemplary embodiments, each of the plurality of venting holes 131BH1, 131BH2, 131BH3 of the second plate portion 131B may overlap two or more battery cells of the battery cells 120CL2 of the battery cell assembly 120A2 in the Z direction. According to exemplary embodiments, each of the plurality of venting holes 131CH1, 131CH2, 131CH3 of the third plate portion 131C may overlap two or more battery cells of the battery cells 120CL3 of the battery cell assembly 120A3 in the Z direction.

According to exemplary embodiments, each of the plurality of venting holes 131AH1, the plurality of venting holes 131AH2, and the plurality of venting holes 131AH3 of the first plate portion 131A may be arranged in a zigzag in the X direction. According to exemplary embodiments, each of the plurality of venting holes 131BH1, the plurality of venting holes 131BH2, and the plurality of venting holes 131BH3 of the second plate portion 131B may be arranged in a zigzag in the X direction. According to exemplary embodiments, each of the plurality of venting holes 131CH1, the plurality of venting holes 131CH2, and the plurality of venting holes 131CH3 of the third plate portion 131C may be arranged in a zigzag in the X direction. According to exemplary embodiments, each of the plurality of venting holes 131AH1, each of the plurality of venting holes 131AH2, and each of the plurality of venting holes 131AH3 may not be aligned with each other in the Y direction. According to exemplary embodiments, each of the plurality of venting holes 131BH1, each of the plurality of venting holes 131BH2, and each of the plurality of venting holes 131BH3 may not be aligned with each other in the Y direction. According to exemplary embodiments, each of the plurality of venting holes 131CH1, each of the plurality of venting holes 131CH2, and each of the plurality of venting holes 131CH3 may not be aligned with each other in the Y direction.

The plate 131 may have an integral structure including the first plate portion 131A, the second plate portion 131B, and the third plate portion 131C. The first plate portion 131A may be connected to the second plate portion 131B. The second plate portion 131B may be connected to the third plate portion 131C.

The first plate portion 131A and the second plate portion 131B may be connected by bridges 131CN1, 131CN2. The bridges 131CN1, 131CN2 may be spaced apart from each other in the Y direction. The first plate portion 131A, the second plate portion 131B, and the bridges 131CN1, 131CN2 may define a slit 131SL1. The slit 131SL1 may extend in the Y direction between the plurality of venting holes 131AH1, 131AH2, 131AH3 of the first plate 131A and the plurality of venting holes 131BH1, 131BH2, 131BH3 of the second plate 131B.

The second plate portion 131B and the third plate portion 131C may be connected by bridges 131CN3, 131CN4. The bridges 131CN2, 131CN3 may be spaced apart from each other in the Y direction. The second plate portion 131B, the third plate portion 131C, and the bridges 131CN2, 131CN3 may define a slit 131SL2. The slit 131SL2 may extend in the Y direction between the plurality of venting holes 131BH1, 131BH2, 131BH3 of the second plate 131B and the plurality of venting holes 131CH1, 131CH2, 131CH3 of the third plate 131C.

The plate 131 may include a plurality of horizontal ribs and vertical ribs. The first plate portion 131A may include a plurality of horizontal ribs 131HFA1, 131HFA2. Each of the plurality of horizontal ribs 131HFA1, 131HFA2 may extend in the X direction. The first plate portion 131A may include a plurality of vertical ribs 131VFA. Each of the plurality of vertical ribs 131VFA may extend in the Y direction. The plurality of horizontal ribs 131HFA1, 131HFA2 may intersect the plurality of vertical ribs 131VFA. Each of the plurality of venting holes 131AH1, 131AH2, 131AH3 may be defined by adjacent horizontal ribs 131HFA1, 131HFA2 and adjacent vertical ribs 131VFA.

The second plate portion 131B may include a plurality of horizontal ribs 131HFB1, 131HFB2. Each of the plurality of horizontal ribs 131HFB1, 131HFB2 may extend in the X direction. The second plate portion 131B may include a plurality of vertical ribs 131VFB. Each of the plurality of vertical ribs 131VFB may extend in the Y direction. The plurality of horizontal ribs 131HFB1, 131HFB2 may intersect the plurality of vertical ribs 131VFB. Each of the plurality of venting holes 131BH1, 131BH2, 131BH3 may be defined by adjacent horizontal ribs 131HFB1, 131HFB2 and adjacent vertical ribs 131VFB.

The third plate portion 131C may include a plurality of horizontal ribs 131HFC1, 131HFC2. Each of the plurality of horizontal ribs 131HFC1, 131HFC2 may extend in the X direction. The third plate portion 131C may include a plurality of vertical ribs 131VFC. Each of the plurality of vertical ribs 131VFC may extend in the Y direction. The plurality of horizontal ribs 131HFC1, 131HFC2 may intersect the plurality of vertical ribs 131VFC. Each of the plurality of venting holes 131CH1, 131CH2, 131CH3 may be defined by adjacent horizontal ribs 131HFC1, 131HFC2 and adjacent vertical ribs 131VFC.

Each of the horizontal ribs 131HFA1 of the first plate 131A may be connected to each of the horizontal ribs 131HFB1 of the second plate 131B by the bridges 131CN1, 131CN2. Each of the horizontal ribs 131HFB1 of the second plate 131B may be connected to each of the horizontal ribs 131HFC1 of the third plate 131C by the bridges 131CN3, 131CN4.

Each of the horizontal ribs 131HFA2 of the first plate 131A may be spaced apart from each of the horizontal ribs 131HFB2 of the second plate 131B in the X direction by the first slit 131SL1. Each of the horizontal ribs 131HFB2 of the second plate 131B may be spaced apart from each of the horizontal ribs 131HFC2 of the third plate 131C in the X direction by the first slit 131SL2.

The fire-resistant film 141 may be located on the plate 131 in the Z direction. The fire-resistant film 141 may overlap the first plate portion 131A, the second plate portion 131B, and the third plate portion 131C in the Z direction. The fire-resistant film 141 may overlap the venting holes 131AH1, 131AH2, 131AH3 of the first plate portion 131A in the Z direction. The fire-resistant film 141 may overlap the venting holes 131BH1, 131BH2, 131BH3 of the second plate portion 131B in the Z direction. The fire-resistant film 141 may overlap the venting holes 131CH1, 131CH2, 131CH3 of the third plate portion 131C in the Z direction.

The fire-resistant film 141 may include slits 141SL1, 141SL2. The slit 141SL1 of the fire-resistant film 141 may overlap the slit 131SL1 of the plate 131 in the Z direction. The slit 141SL2 of the fire-resistant film 141 may overlap the slit 131SL2 of the plate 131 in the Z direction. The slit 131SL1 of the plate 131 and the slit 141SL1 of the fire-resistant film 141 may constitute a slit 151SL1 of the flame cover 151. The slit 131SL2 of the plate 131 and the slit 141SL2 of the fire-resistant film 141 may constitute a slit 151SL2 of the flame cover 151.

When an ignition event occurs in one of the battery cell assemblies 120A1, 120A2, 120A3 overlapping the fire-resistant film 141, the fire-resistant film 141 may be configured to rupture. When the pressure in the accommodation space of each of the battery cell assemblies 120A1, 120A2, 120A3 overlapping the fire-resistant film 141 becomes equal to or greater than a reference pressure, the fire-resistant film 141 may be configured to rupture.

For example, referring to FIG. 7 together, when an ignition event occurs in one of the battery cells 120CL1 of the battery cell assembly 120A1, the pressure in the accommodation space of the battery cell assembly 120A1 in the pack housing 110 may increase. The increased pressure in the accommodation space of the battery cell assembly 120A1 may apply pressure to the fire-resistant film 141 through the plurality of venting holes 131AH1, 131AH2, 131AH3 of the plate 131. When the pressure in the accommodation space of the battery cell assembly 120A1 becomes equal to or greater than the reference pressure, the fire-resistant film 141 may be configured to rupture. Heat, gas, and ejecta generated from the ignited battery cell may move to an upper portion of the flame cover 151 through the plurality of venting holes 131AH1, 131AH2, 131AH3 and the ruptured portion of the fire-resistant film 141. The heat, gas, and ejecta that moved to the upper portion of the flame cover 151 may be discharged to the outside of the battery pack 100 through venting holes provided in the sidewalls 114 of the pack housing 110. Accordingly, thermal propagation from the battery cell assembly 120A1 to the adjacent battery cell assembly 120A2 can be prevented.

However, the shape of the fire-resistant film 141 is not limited to the above. According to exemplary embodiments, the battery pack 100 may include a plurality of fire-resistant films spaced apart in the X direction. For example, the battery pack 100 may include a first fire-resistant film overlapping the first plate portion 131A in the Z direction, a second fire-resistant film overlapping the second plate portion 131B, and a third fire-resistant film overlapping the third plate portion 131C. The first fire-resistant film, the second fire-resistant film, and the third fire-resistant film may be spaced apart from each other in the X direction. According to exemplary embodiments, the battery pack 100 may include the same number of fire-resistant films as the number of the battery cell assemblies 120A1, 120A2, 120A3.

The flame cover 151 may be coupled to the pack housing 110. According to exemplary embodiments, each of the flame covers 151 may be bolted to the cross beams 113. As illustrated in FIG. 1 and FIG. 3, the flame cover 151 may be fastened to each of the cross beams 113 by bolts 170. The bolts 170 may overlap the slit 151SL1 of the flame cover 151 in the Z direction. The bolts 170 may overlap the slit 151SL2 of the flame cover 151 in the Z direction. However, the coupling method of the flame cover 151 is not limited thereto. According to exemplary embodiments, the flame cover 151 may be coupled to the center beam 112.

The flame cover 151 according to exemplary embodiments of the present disclosure can prevent thermal propagation to adjacent battery cell assemblies when a fire event occurs in one battery cell assembly among the plurality of battery cell assemblies 120A1, 120A2, 120A3.

Referring to FIG. 6 and FIG. 7 together, when a fire event occurs in the battery cell assembly 120A1, heat generated from the battery cell assembly 120A1 may be conducted to the first plate portion 131A. The heat generated from the battery cell assembly 120A1 may be conducted through the horizontal ribs 131HFA1, 131HFA2. The plurality of venting holes 131AH1, 131AH2, 131AH3 may delay heat conduction within the first plate portion 131A. The heat conducted through the horizontal ribs 131HFA1, 131HFA2 may be blocked by the slit 131SL1. A heat conduction direction may be diverted to a vertical rib 131VHA adjacent to the slit 131SL1. Accordingly, heat conduction from the first plate portion 131A to the second plate portion 131B can be prevented or delayed.

In addition, since the flame cover 151 according to exemplary embodiments of the present disclosure simultaneously covers the plurality of battery cell assemblies 120A1, 120A2, 120A3, the number of parts required in the assembly process of the battery pack 100 can be reduced, and the work process can be simplified. In contrast, in the case of a battery pack including a plurality of flame covers that cover each of the battery cell assemblies one by one, since each flame cover must be assembled on each of the battery cell assemblies, the number of parts used in the assembly process and the number of operations increase. The flame cover 151 according to exemplary embodiments of the present disclosure simultaneously covers the plurality of battery cell assemblies 120A1, 120A2, 120A3, but by providing slits 151SL1, 151SL2 between the adjacent plurality of battery cell assemblies 120A1, 120A2, 120A3, thermal propagation and thermal runaway between the battery cell assemblies through the flame cover 151 can be prevented, while the assembly process of the battery pack 100 can be simplified.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery pack comprising:
a pack housing comprising a bottom portion;
first and second battery cell assemblies on the bottom portion; and
a flame cover on the first and second battery cell assemblies,
wherein each of the first and second battery cell assemblies comprises a plurality of battery cells arranged in a first direction parallel to the bottom portion,
wherein the flame cover comprises a plate and a fire-resistant film on the plate,
wherein the plate comprises a first plate portion overlapping the first battery cell assembly in a vertical direction and comprising a plurality of first venting holes;
a second plate portion overlapping the second battery cell assembly in the vertical direction and comprising a plurality of second venting holes; and
bridges connecting the first plate portion and the second plate portion, and
wherein the fire-resistant film overlaps each of the plurality of first venting holes and the plurality of second venting holes in the vertical direction.

2. The battery pack of claim 1, wherein the plate further comprises a first slit defined by the first plate portion, the second plate portion, and the bridges.

3. The battery pack of claim 2, wherein the length of each of the plurality of first venting holes in the first direction is different from the length of the first slit in the first direction, and
wherein the length of each of the plurality of second venting holes in the first direction is different from the length of the first slit in the first direction.

4. The battery pack of claim 3, wherein the length of each of the plurality of first venting holes in the first direction is greater than the length of the first slit in the first direction, and
wherein the length of each of the plurality of second venting holes in the first direction is greater than the length of the first slit in the first direction.

5. The battery pack of claim 2, wherein the length of each of the plurality of first venting holes in a second direction parallel to the bottom portion and perpendicular to the first direction is different from the length of the first slit in the second direction, and
wherein the length of each of the plurality of second venting holes in the second direction is different from the length of the first slit in the second direction.

6. The battery pack of claim 5, wherein the length of each of the plurality of first venting holes in the second direction is smaller than the length of the first slit in the second direction, and
wherein the length of each of the plurality of second venting holes in the second direction is smaller than the length of the first slit in the second direction.

7. The battery pack of claim 2, wherein the fire-resistant film comprises a second slit overlapping the first slit of the plate in the vertical direction.

8. The battery pack of claim 2, wherein the pack housing further comprises a cross beam between the first battery cell assembly and the second battery cell assembly, and
wherein the first slit of the plate overlaps the cross beam in the vertical direction.

9. The battery pack of claim 8, further comprising bolts fastening the flame cover to the cross beam through the first slit.

10. The battery pack of claim 1, wherein each of the plurality of first venting holes overlaps a corresponding one of the plurality of battery cells of the first battery cell assembly in the vertical direction, and
wherein each of the plurality of second venting holes overlaps a corresponding one of the plurality of battery cells of the second battery cell assembly in the vertical direction.

11. The battery pack of claim 1, wherein the plurality of first venting holes are arranged in a matrix, and
wherein the plurality of second venting holes are arranged in a matrix.

12. A battery pack comprising:
a pack housing on which first and second battery cell assemblies are mounted; and
a flame cover on the first and second battery cell assemblies,
wherein the flame cover comprises:
a plate comprising a first plate portion overlapping the first battery cell assembly in a vertical direction and comprising a plurality of first venting holes, a second plate portion overlapping the second battery cell assembly in the vertical direction and comprising a plurality of second venting holes; and a first slit between the first plate portion and the second plate portion; and
a fire-resistant film on the plate.

13. The battery pack of claim 12, wherein the fire-resistant film comprises a second slit overlapping the first slit in the vertical direction.

14. The battery pack of claim 12, wherein the fire-resistant film overlaps the plurality of first venting holes and the plurality of second venting holes in the vertical direction.

15. The battery pack of claim 12, wherein the plate further comprises bridges connecting the first plate portion and the second plate portion.
